# EUROPEAN PATENT APPLICATION

(11) **EP 4 089 806 A1**
(43) Date of publication of application: **16.11.2022**
(21) Application number: 21173106.2
(22) Date of filing: 10.05.2021
(51) Int. Cl.: H01M 50/105, H01M 10/04, H01M 10/647, H01M 50/124, H01M 4/64, H01M 4/04, H01M 4/66, H01M 6/40

(54) **A METHOD FOR PRODUCING A CURRENT COLLECTOR FOR A THIN BATTERY**

(71) Applicant: Renata AG, 4452 Itingen (CH)
(72) Inventor: EL BARADAI, Oussama, 4057 Basel (CH); WANG, Xiaojun, 4455 Zunzgen (CH)
(74) Representative: ICB SA

(57) **Abstract**

According to the method of the invention, a current collector (5a, 5b) for a thin battery is produced by a printing or spray deposition technique on a substrate (1) formed of a battery packaging material. The layer obtained by printing or spray deposition comprises particles of an electrically conductive material. The printing or spraying step is followed by curing using a light source, to thereby obtain the current collector. The printed or sprayed layer is produced having the required form of the current collector, so that no stamping or other forming operations are required. Current collectors according to the invention have comparable or improved mechanical and electrical properties to the traditional foil or mesh-based current collectors.

## Description

### Field of the Invention

The present invention is related to thin batteries as used in electronic watches or other portable devices.

### State of the art.

Thin batteries for the electronic device market include at least one pair of current collectors in physical contact respectively with the cathode and the anode of the battery. The cathode and anode materials are based on a given chemistry, often including lithium for the anode and magnesium oxide for the cathode for the fabrication of Li-ion based batteries. The electrodes are separated by a separator sheet that contains a liquid or solid electrolyte and this assembly of layers is packaged in a suitable packaging material.

The standard way of producing such batteries includes the manufacturing of a current collector foil or mesh, formed of an electrically conductive material, for example copper or aluminium, followed by coating the cathode and anode materials on the current collector and subjecting the collector foil or mesh to a stamping procedure in order to obtain the required size and shape of the collectors, as determined by the shape and dimensions of the battery packaging material.

This stamping procedure is known to lead to defects such as cracking of the coating or edge defects in the current collector foil or mesh, which may be potentially detrimental for battery performance. Moreover, any change in the current collector form factor requires the development of new tools increasing the cost and time of production.

### Summary of the invention

The invention aims to provide a solution to the above-described problems. This aim is achieved by the method as disclosed in the appended claims, and by a battery obtainable by applying said method. According to the method of the invention, a current collector for a thin battery is produced by forming a current collector layer onto a substrate formed of a battery packaging material, using a printing or spray deposition technique. The layer comprises particles of an electrically conductive material. The printing or spraying step is followed by curing the layer with the use of a light source, to thereby obtain the current collector. According to preferred embodiments, the curing technique applied is a low temperature sintering process, such as photonic sintering or laser sintering. The printed or sprayed layer is produced having the required form of the current collector, so that no stamping or other forming operations are required, thereby solving the above-described problems related to such operations. The inventors have established that current collectors produced by printing or spraying and curing in accordance with the invention have comparable or improved mechanical and electrical properties to the traditional foil or mesh-based current collectors. A battery according to the invention is characterised in that the resistivity of the current collectors of the battery is higher than the bulk resistivity of the material of the current collectors.

### Brief description of the figures

- Figure 1 shows a packaging substrate for a thin battery, cut into a shape that is compatible with the method of the invention.
- Figure 2 illustrates the shape of the current collectors obtained by screen printing or spray deposition and curing, on the substrate of Figure 1.
- Figure 3 illustrates the production of the electrodes onto the current collectors.
- Figure 4 shows the assembled thin battery obtained by performing further assembly steps after the steps illustrated in Figures 1-3.
- Figures 5-7 illustrate alternative packaging substrates and the application thereon of a method in accordance with the invention.
- Figure 8 compares the electrical performance of three batteries, comparing the performance of batteries comprising current collectors obtained by the method of the invention to a battery comprising traditional current collectors.

### Detailed description of embodiments of the invention

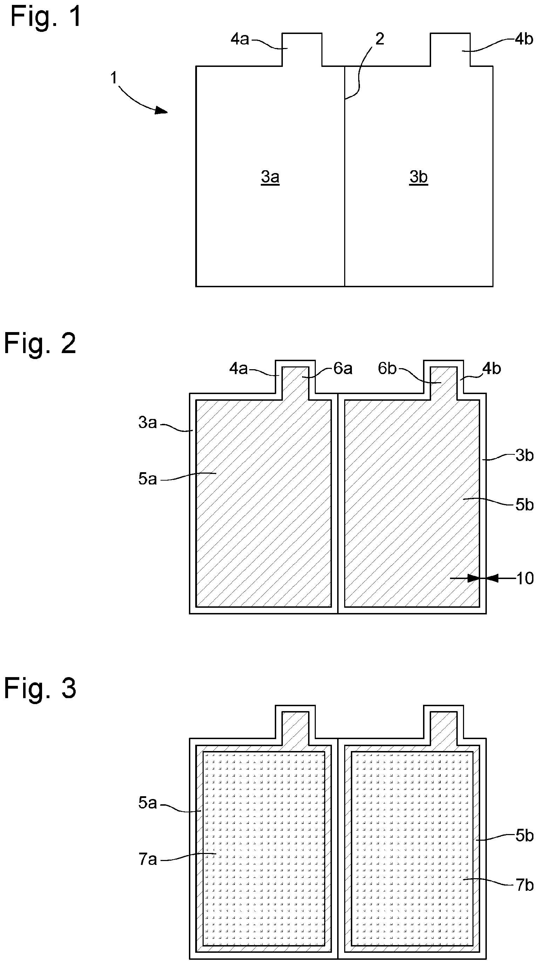

With reference to Figure 1, the first step of the method of the invention is to provide a substrate 1 in the form of a planar packaging material for a thin battery. In the embodiment shown, the substrate 1 is a pre-cut piece of the packaging material, that is foldable about a central line 2. In thin-film battery technology, this type of substrate is also referred to as a pouch. The material may be any kind of known battery packaging material, for example a multilayer material comprising a metal layer sandwiched between layers of synthetic material. The substrate 1 is placed on a planar surface with the layer that is destined to be in contact with the current collectors of the battery facing upwards. This upward-facing layer is formed of a heat-sealable material, for example a polypropylene material or polyethylene material. In the embodiment shown, the packaging material is pre-cut in the form of a rectangle extending on both sides of the folding line 2, said folding line dividing the substrate in a first and second rectangular portion 3a and 3b. A first and second tab 4a and 4b are extending outward from the upper edge of the respective rectangular portions 3a and 3b, at locations which are out-of-center with respect to the center lines of said rectangular portions 3a and 3b. The out-of-center positions of the tabs 4a and 4b are chosen such that when the substrate 1 is folded along the folding line 2, the tabs 4a and 4b are not overlapping (see further).

According to a preferred embodiment, the upward facing surface of the packaging substrate is pre-treated by a surface activation treatment, such as a corona plasma treatment. The surface activation increases the surface energy and diminishes the risk of defects in the subsequent printing step or spray deposition step applied for producing a current collector layer. The term current collector layer' is defined in the present context as a layer obtainable as the direct result of printing or spray deposition on the packaging substrate. The current collector layer comprises electrically conductive particles which are not forming a homogeneous conductive sheet. When screen printing is used, this latter step is performed, using a metal ink such as a silver ink or a copper ink, or any other screen-printable metal ink of a metal that is suitable to serve as a current collector for a thin battery. The screen printing step is performed in areas which are offset from the boundaries of the rectangular portions 3a and 3b and of the tabs 4a and 4b, resulting in thin current collector layers 5a and 5b of the printed metal ink, in rectangular areas which are offset from the boundaries of the rectangular portions 3a and 3b. The current collector layers 5a and 5b include tab areas 6a and 6b offset from the boundaries of the tabs 4a and 4b. The offset distance is preferably the same everywhere along the circumference of the printed areas, creating a margin 10 of constant width.

Screen printing is known as such and details of this method need therefore not be described. A commercially available screen printing tool can be used, for example from the supplier Aurel^{®}. Screen printing of the layers 5a and 5b (including the tabs 6a and 6b) are performed according to conditions which are compatible with the packaging material onto which the layers are printed. According to preferred embodiments, the thickness of the printed current collector layers is between 2 µm and 50 µm. The inks used in the method of the invention are inks comprising nanoparticles of electrically conductive material, preferably metal. Silver or copper inks of this type are known and available from various suppliers, such as the company Dupont^{®}.

Other printing methods can be used to obtain current collector layers having similar characteristics as the layers obtained by screen printing, such as flexography gravure printing and 3D printing. As an alternative to printing, the current collector layers 5a and 5b having the above-described characteristics can be obtained by spray deposition.

The layer obtained by printing or spray deposition is a layer comprising particles, preferably nano-particles of the electrically conductive material. Whether or not such a particle-based layer is obtainable by printing or spray deposition depends primarily on the material used. Ag and Cu are primary examples of suitable materials in that respect, but the invention is not limited thereto. Also Ni may be used. Stainless steel is however not a suitable material in this respect.

After the printing or spray deposition step, the current collector layers 5a and 5b (including the tabs 6a and 6b) are subjected to curing in order to produce the actual current collectors in the form of a homogenous electrically conductive layer. Curing is done by illuminating the printed or sprayed layers with a light source so that the homogenous sheet is obtained without excessive heating of the packaging material. According to preferred embodiments, low temperature sintering techniques are used for this purpose, such as photonic sintering or laser sintering. Low temperature sintering is defined as sintering that is applicable at room temperature, more particularly at any temperature between 15°C and 30°C, or between 20° and 25°C.

Photonic sintering is a method known as such, involving the application of short high-energy light pulses to a layer comprising nanoparticles in order to heat up the layer and obtain a homogenous layer of the particle material, in a very short time, and with minimum thermal impact on the substrate onto which the layer has been deposited. Known tools for applying this process can be used in the method of the invention, as available for example from the supplier Novacentrix^{®}. It was found that typical thin battery packaging material is compatible with a photonic sintering process applied at room temperature. According to preferred embodiments, the parameters of the photonic sintering process applied in the method of the invention are lying within the following ranges :
- Length of the pulses between 1 and 20 ms
- Pulse frequency (number of pulses per second) between 200 and 800
- Pulse sintering voltage : between 1 kV and 4 kV
- Duration of the photo-sintering process : between 0.1 seconds and 5 seconds
According to further preferred embodiments, the energy input by the photonic sintering process into the current collector layers is between 0.5 and 4 J/cm².

The sintering process results in the current collectors 5a and 5b as such, wherein the nanoparticles of the printed ink layers are homogenized into uniform layers. The sintering process thereby boosts the electrical conductivity of the current collectors 5a and 5b. This ends the process steps of the method of the invention for producing the current collectors. The invention is however equally related to a method for producing a battery comprising the thus-produced current collectors. The process steps for producing the battery as such are described hereafter.

Following the curing process, the electrodes 7a and 7b are produced onto the current collectors 5a and 5b, as illustrated in Figure 3. The electrodes consist of layers comprising active materials consistent with a particular battery chemistry, for example Li for the anode and MgO₂ for the cathode. The layers may comprise said active materials, mixed with a binder, for example a vinylidene fluoride (PVdF) copolymer, an agent conferring electron conductivity (for example carbon black) and a solvent. The electrode layers 7a and 7b may be applied by any method known in the art, including screen printing. The electrode layers 7a and 7b are preferably offset from the boundaries of the main rectangular portion of the current collectors 5a and 5b, i.e. the electrodes are not produced on the tabs 6a and 6b of said current collectors.

This is followed by the application of a separator sheet (not shown), as is well-known in the art. The separator sheet may comprise a solid electrolyte or it may be supplied with a liquid electrolyte dispensed onto the separator sheet after the positioning of the sheet.

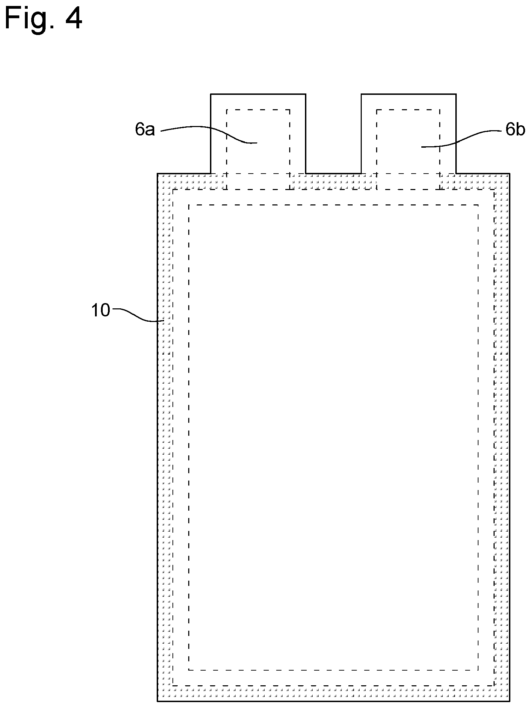

Then the substrate 1 is folded along the folding line 2 and sealed along the margin 10, as illustrated in Figure 4. The tabs 4a and 4b are not overlapping, and the margins of the packaging material along the edges of the tabs are not sealed, leaving the tabs 6a and 6b of the current collectors available as external contacts for the battery. This type of sealing process is known as such, and may be done according to any known method in use today for the production of thin batteries.

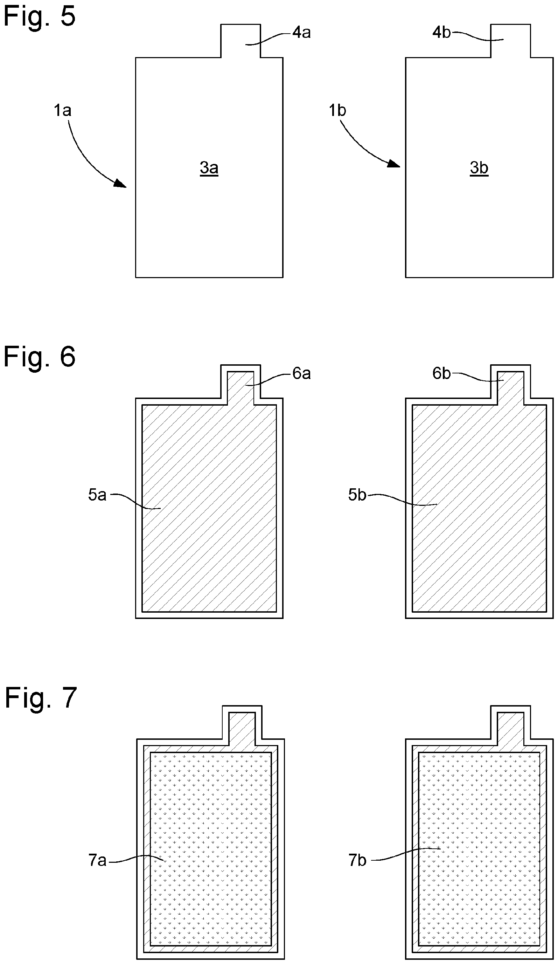

In an alternative embodiment illustrated in Figures 5 to 7, two separate packaging substrates 1a and 1b are provided, having the same shape as the portions 3a+4a and 3b+4b of the substrate 1 of the first embodiment. Onto these packaging substrates, the current collectors 5a and 5b are obtained by the method of the invention, for example by screen printing and photonic sintering, and the electrodes 7a and 7b are obtained by a known method. The assembly of these separate substrates 1a and 1b leads to a sealed battery with the same appearance as the battery shown in Figure 4.

The method of the invention is equally applicable to a packaging substrate that is not provided with tabs 4a and 4b, but wherein the packaging material comprises a metal layer sandwiched between synthetic layers, each provided with an opening that exposes the sandwiched metal layer of the packaging. The current collector produced by the method of the invention is then in direct contact with the exposed metal layer of the packaging material. The opening on the other side of the package then serves as a contact tab for the battery. This type of packaging material is described for example in patent publication document WO2020007584A1, included herein by reference.

The current collectors obtained according to the invention exhibit a resistivity that is in line with or represents an improvement over traditionally produced stainless steel current collectors, and they enable the production of batteries with excellent performance, while not suffering from the main problems of the prior art set out in the introduction. The current collectors are produced directly in the correct shape, so that stamping procedures of the current collectors are no longer needed, which overcomes the problems related to such procedures. Also, the development and production of different battery shapes and sized requires less time and equipment, enabling a reduction of the production costs and complexity.

While the resistivity of the current collectors obtained by the method of the invention is comparable or lower than the conventional stainless steel current collectors, it is a characteristic of the current collectors (and therefore of the batteries) produced by the method of the invention, that the resistivity of the current collectors is higher than the bulk resistivity of the electrically conductive material of which the collectors are formed. This means that the resistivity of a current collector in a battery according to the invention is higher than the resistivity of a foil or mesh-based current collector formed of the same material. At the same time, the thickness of the current collectors in a battery according to the invention is comparable to the thickness of conventional foil or mesh-based current collectors. According to preferred embodiments, the thickness of the current collectors in a battery according to the invention is between 2 µm and 50 µm. According to preferred embodiments, the resistivity of a current collector of a battery according to the invention is between 2 and 100 times the bulk resistivity of the electrically conductive material applied in the current collectors, with the thickness of the current collectors between 2 µm and 50 µm. For Ag and Cu, this means that the resistivity of the current collector of a battery produced according to the method of the invention is respectively lying within the following ranges :
- For Ag : between 3.18E-08 Ωm and 1.59E-06 Ωm
- For Cu : between 3.36E-08 Ωm and 1.68E-06 Ωm

A number of tests were performed by the inventors, which are proof of the excellent performance of the current collectors obtained by the method of the invention. The tests and results are described hereafter.

### Silver based current collector preparation

Silver ink for screen printing applications has been purchased from Dupont^{®}. The ink was screen printed by means of a screen printing process machine purchased from the company Aurel^{®}. Before printing, the pouch has been pre-treated by a corona treatment at 200 W. The screen used in this example was a Steel 325-326 screen type enabling printed thickness ranging between 10 and 20 µm. After printing, a sintering process was applied using a photonic sintering machine from the company Novacentrix^{®}. A pulse envelope of 2 ms in length and 2 kV was used to provide a total energy of 2 J/cm². Finally the electrical conductivity and the thickness have been measured and compared with a reference current collector foil produced by the traditional production technique.

### Table 1 resumes the results.

**Table 1**

| Batch | c.c. thickness (µm) | Sheet Resistance (Ohm /sq) | Resistivity (x Ag bulk*) |
|---|---|---|---|
| Reference | 25±1 | 4.4E-02 ± 1.7E-03 | 62 ± 2 |
| Ag printed current collector | 13±1 | 3.6E-02 ± 5.0E-03 | 28 ± 9 |

| | | | |
|---|---|---|---|
| *expressed as the number of times the resistivity of bulk Ag is to be multiplied to arrive at the resistivity of the sample | | | |

As shown in Table 1, the printed/sintered current collector exhibits acceptable thickness, comparable sheet resistance and improved resistivity compared to a conventional stainless steel current collector foil used in this example as a reference. In test batteries produced on the basis of these current collectors (see further), it was seen that the higher resistivity of the stainless steel current collector foil measured in Table 1 leads to lower capacity compared with printed/sintered current collectors.

### Copper based current collector preparation

The process steps described in the previous paragraph were also performed to produce printed copper-based current collectors. The copper-based ink was purchased from the company Novacentrix^{®}. The ink was printed by means of a screen printing machine already detailed in the silver current collector example. The screen used in this example was a PET 140-34 enabling printed thickness ranging between 10 and 20 µm. After printing, a photonic sintering process was applied. A pulse envelope of 2 ms in length and 1 kV was used to provide a total energy of 1 J/cm2. Table 2 compares the results of the screen-printed copper current collector with the foil-based current collector used as a reference.

**Table 2**

| Batch | Thickness (µm) | Sheet Resistance (Ohm /sq) | Resistivity (x Cu bulk) |
|---|---|---|---|
| Reference | 25±1 | 4.4E-02 ± 1.7E-03 | 66 ± 2 |
| Cu printed current collector | 17±2 | 4.6E-02 ± 7.5E-03 | 50 ± 2 |

In this case the resistivity value of the printed/sintered copper current collector is also slightly improved compared with the conventional stainless steel current collector foil.

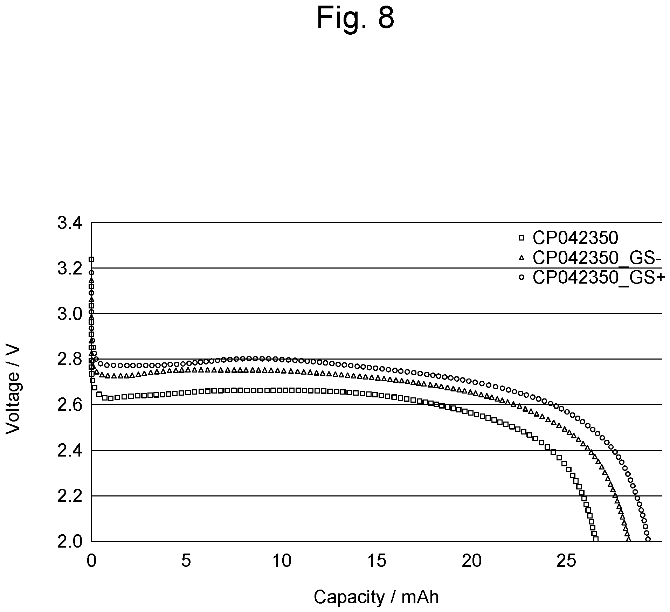

After current collector characterization, primary batteries based on the chemistry system Li/MnO₂ have been assembled and electrochemically tested. In order to identify the performances of each printed current collector, one of the conventional current collector foils has been replaced by a printed/sintered one. This approach enables the individual characterization of each printed current collector. In order to compare the results, reference batteries based on conventional current collector foils have been also assembled and tested. The batteries have been discharged at a constant current rate of C/10 corresponding to 10 hours to discharge the cells down to 2 V. Three types of batteries have been assembled and tested :
a. The reference named CP042350 (both current collectors are foil collectors, using stainless steel foils having a thickness of 25µm)
b. Printed copper current collector named CP042350GS (one foil collector and one printed Cu collector)
c. Printed silver current collector named CP042350GS+ (one foil collector and one printed Ag collector)
d. The results in figure 8 show how the printed/sintered current collector can be a valid alternative to a conventional foil without impacting the discharge performances.

While the invention has been illustrated and described in detail in the drawings and foregoing description, such illustration and description are to be considered illustrative or exemplary and not restrictive. Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A method for producing a current collector (5a,5b) for a battery, the method comprising the steps of :
providing a substrate (1) formed of a planar battery packaging material,
- producing on a predefined area of the substrate a current collector layer by a printing or spray deposition technique, the current collector layer comprising particles of an electrically conductive material,
- curing the current collector layer by illuminating the layer with a light source, thereby obtaining the current collector (5a,5b).

2. A method according to claim 1, wherein the current collector layer is produced by a printing technique chosen from the group consisting of screen printing, flexography gravure printing, and 3D printing.

3. A method according to claim 1 or 2, wherein the curing step is performed by low temperature sintering.

4. A method according to claim 3, wherein the curing step is performed by photonic sintering or laser sintering.

5. A method according to claim 4, wherein the curing step is performed by a pulsed photonic sintering process, applying the following parameters :
- Length of the pulses between 1 and 20 ms
- Pulse frequency (number of pulses per second) between 200 and 800
- Pulse sintering voltage : between 1 kV and 4 kV
- Duration of the photo-sintering process : between 0.1 seconds and 5 seconds

6. A method according to claim 5, wherein the energy input applied during the photonic sintering step is between 0.5 J/cm2 and 4 J/cm2.

7. A method according to any one of the preceding claims, further comprising the step of pre-treating the substrate (1) by a surface activation treatment.

8. A method according to any one of the preceding claims, wherein the curing step is performed at room temperature.

9. A method according to any one of the preceding claims, wherein the current collector layer obtained by printing or spray deposition has a thickness between 10 µm and 20 µm.

10. A method for producing a battery, comprising the steps of producing a first and a second current collector (5a,5b) by applying a method according to any one of the preceding claims, followed by the steps of :
- producing a first electrode (6a) on the first current collector (5a),
- producing a second electrode (6b) on the second current collector (5b),
- Producing a separator material comprising an electrolyte on the first and/or the second electrode,
- assembling the first and second electrodes and current collectors and sealing the packaging materials used in the production of the current collectors, to thereby obtain the battery.

11. A battery comprising a planar packaging substrate comprising a first and second current collector (5a, 5b), wherein the current collectors are obtainable by printing or spray deposition of current collector layers on the substrate, and by curing the current collector layers.

12. A battery comprising a planar packaging substrate comprising a first and second current collector (5a, 5b), **characterised in that** the current collectors are formed of an electrically conductive material and wherein the resistivity of the current collectors is higher than the bulk resistivity of said material.

13. A battery according to claim 12, wherein the resistivity of the current collectors (5a, 5b) is between 2 and 100 times said bulk resistivity and wherein the thickness of the current collectors is between 2 µm and 50 µm.
